(19) Europäisches Patentamt
European Patent Office
Office européen des brevets

(11) **EP 4 487 939 A1**

(12) **EUROPEAN PATENT APPLICATION**
published in accordance with Art. 153(4) EPC

(43) Date of publication:
**08.01.2025 Bulletin 2025/02**

(21) Application number: 23763167.6

(22) Date of filing: **02.02.2023**

(51) International Patent Classification (IPC):
**B01D 61/12** (2006.01)    **B01D 61/58** (2006.01)
**C02F 1/44** (2023.01)

(52) Cooperative Patent Classification (CPC):
**B01D 61/12; B01D 61/58; C02F 1/44;** Y02A 20/131

(86) International application number:
**PCT/JP2023/003390**

(87) International publication number:
**WO 2023/166905 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022 JP 2022032755**

(71) Applicant: **Kurita Water Industries Ltd.
Tokyo 164-0001 (JP)**

(72) Inventor: **ISHII, Kazuki
Tokyo 164-0001 (JP)**

(74) Representative: **Hoffmann Eitle
Patent- und Rechtsanwälte PartmbB
Arabellastraße 30
81925 München (DE)**

(54) **METHOD FOR OPERATING DESALTING DEVICE**

(57)    This method operates a desalting device having a first desalting device and a second desalting device, the method involving: a normal operation step for supplying water to be treated to the first desalting device, separating the water to be treated into first concentrated water and first desalted water, supplying the first concentrated water to the second desalting device, and separating the first concentrated water into second concentrated water and second desalted water; and a dilute water passing operation step for passing dilute water having a concentration lower than the first concentrated water through the second desalting device before a corrected permeated water amount of the second desalting device decreases.

FIG. 1 (Flux recovery operation of second RO device 22)

FIG. 1

**Description**

Technical Field

The present invention relates to a method for operating a desalting device, and more particularly to a method for operating desalting devices having a first desalting device and a second desalting device.

Related Art

In a desalting device such as a reverse osmosis (RO) membrane, the precipitation of scale such as calcium carbonate, silica, calcium fluoride, etc. and membrane clogging due to organic matter occurs after long-term operation, resulting in a decrease in the performance of the desalting device, such as a decrease in the salt removal rate and a decrease in the permeated water amount. In the case of scale clogging, a method is adopted in which the ion concentration in the raw water is measured and the desalting device is operated so that the saturation index of the concentrated water in the desalting device is not exceeded in order to prevent a decrease in the performance of the desalting device. The saturation index herein generally refers to the logarithmic value of the product of the concentration and ionic strength of each ion species involved in scale formation divided by the solubility product. The desalting device is operated within a range such that the saturation index does not exceed zero. Furthermore, when the saturation index exceeds zero, for example, a scale inhibitor is added to suppress the formation of scale, and a desalting device is operated.

When the water quality is such that the saturation index is so high that it cannot be controlled even by adding scale inhibitors, chemical cleaning such as acid washing or alkaline washing has conventionally been used to remove the scale. However, in typical cleaning, the equipment is stopped, washed with a cleaning solution, and the cleaning solution is collected before water passing is restarted, resulting in high cleaning costs. Thus, there has been a demand for a desalting device whose performance does not deteriorate even after long-term operation and which does not require chemical cleaning.

One of the methods for operating the desalting device is the flushing method. Here, flushing refers to an operation of discharging feedwater from the concentrated water discharging pipe to the outside of the system by opening the on-off valve of the concentrated water discharging pipe while continuing to operate the feedwater pump. By passing water through at a faster flow rate than during a normal operation, dirt that clogs the membrane surface may be effectively washed away. Flushing is generally performed 1 to 10 times per day for 30 to 120 seconds per flush. However, flushing for a few minutes at a time is not enough to restore the degraded desalting device, and cleaning with a cleaning solution is ultimately required. Furthermore, when flushing is performed, the on-off valve of the concentrated water pipe is opened, and thus, while flushing is being performed, permeated water cannot be produced, and the recovery rate of the desalting device decreases.

Furthermore, since a salt concentration equivalent to that of the RO feed water is insufficient to restore the desalting device degraded by flushing, it is preferable to perform flushing with water having a low salt concentration.

Another method is to reverse the flow direction of the water to be treated in the module. According to this method, the turbid matter accumulated on the raw water spacer may be easily peeled off, and the stability of the desalting device is improved (Patent Documents 1 and 2). However, the number of valves required to reverse the flow increases significantly, significantly increasing the initial cost. Furthermore, if a valve fails, the valve is unable to be switched, which significantly reduces the stability of the device. Furthermore, there is no mention of the effect of flow reversal on the separation of scale material.

Patent Document 3 describes a method of washing scale by passing washing water having low concentrations of F ions, Al ions, and Na ions through the system. In this method, when the ratio of a standardized permeated water amount (corrected permeated water amount) calculated from the flow rate, pressure, and water temperature in the reverse osmosis membrane treatment process to a preset initial standardized permeated water amount reaches a specified value, the passing of cleaning water is switched on. However, it has been found that this method does not sufficiently restore the degraded desalting device.

Citation List

Patent Document

Patent Document 1: Japanese Patent Application Laid-Open (JP-A) No. 2004-141846.
Patent Document 2: Japanese Patent Application Laid-Open (JP-A) No. 2004-261724.
Patent Document 3: Japanese Patent Application Laid-Open (JP-A) No. 2020-121278.

SUMMARY

Technical Problem

In view of the above problems, an object of the present invention is to provide a method for operating a desalting device that may prevent a decrease in the desalting performance of the desalting device.

Solution to Problem

The method for operating a desalting device according to one aspect of the present invention is a method for operating a desalting device having a first desalting device and a second desalting device, including: a normal operation step, in which a water to be treated is supplied to a first desalting device and separated into a first concentrated water and a first desalted water, and the first concentrated water is supplied to a second desalting device and separated into a second concentrated water and a second desalted water; and a dilute water passing operation step, in which a dilute water having a lower concentration than the first concentrated water is passed through the second desalting device before a corrected permeated water amount of the second desalting device is reduced.

In one aspect of the present invention, a plurality of the second desalting devices are arranged in parallel, and while the first desalting device and some of the second desalting devices are performing the normal operation step, other second desalting devices perform the dilute water passing operation step.

The method for operating a desalting device according to one aspect of the present invention is a method for operating a desalting device having a first desalting device and two second desalting devices, alternately performs: a first water passing pattern, in which a water to be treated is supplied to a first desalting device and separated into a first concentrated water and a first desalted water, the first concentrated water is supplied to one second desalting device and separated into a second concentrated water and a second desalted water, and a dilute water having a lower concentration than the first concentrated water is passed through other second desalting device; and a second water passing pattern, in which a water to be treated is supplied to a first desalting device and separated into a first concentrated water and a first desalted water, the first concentrated water is supplied to other second desalting device and separated into a second concentrated water and a second desalted water, and a dilute water having a lower concentration than the first concentrated water is passed through one second desalting device. The first water passing pattern and the second water passing pattern are switched at a frequency of once every 30 to 180 minutes.

In one aspect of the present invention, a water having a dissolved salt concentration less than a saturation solubility is used as a dilute water.

In one aspect of the present invention, a desalted water from the first desalting device or from the first desalting device and the second desalting device is used as a dilute water.

In one aspect of the present invention, a scale inhibitor is added to a dilute water.

In one aspect of the present invention, the desalting device is a reverse osmosis membrane device.

In one aspect of the present invention, a dilute water has a water temperature of 25°C or higher.

In one aspect of the present invention, the first concentrated water has a water temperature of 20°C or higher, a pH of <6.0, a calcium ion concentration of 50 to 500 mg/L, an aluminum ion concentration of 0.01 to 0.5 mg/L, an iron ion concentration of 0.01 to 0.25 mg/L, and a silica concentration of 500 to 1500 mg/L.

Effects of Invention

In a normal operation step of the method for operating a desalting device of the present invention, the water to be treated is passed through a first desalting device so as to be separated into a first desalted water and a first concentrated water, and the first concentrated water is passed through a second desalting device so as to be separated into a second desalted water and a second concentrated water. By passing a dilute water through the second desalting device before the desalting performance of the second desalting device is substantially deteriorated by performing the normal operation step, the desalting performance of the second desalting device may be prevented from being deteriorated.

It is noted that in an aspect in which a desalted water from the first or second desalting device is used as dilute water when the second desalting device performs a flux recovery operation, auxiliary equipment such as a tank is not required, and the device configuration is simplified. Further, by using water having a low salt concentration, that is, the permeated water from the first desalting device, as the dilute water, the scale adhering to the second desalting device may be dissolved and removed more sufficiently than when the water to be treated is used as the dilute water.

BRIEF DESCRIPTION OF DRAWINGS

[FIG. 1] is a flow diagram illustrating the method for operating the desalting device according to an embodiment.
[FIG. 2] is a flow diagram illustrating the method for operating the desalting device according to an embodiment.
[FIG. 3] is a flow diagram illustrating the method for operating the desalting device according to an example.
[FIG. 4] is a flow diagram illustrating the method for operating the desalting device according to an example.
[FIG. 5] is a graph showing the results of the example and the comparative example.

DESCRIPTION OF EMBODIMENTS

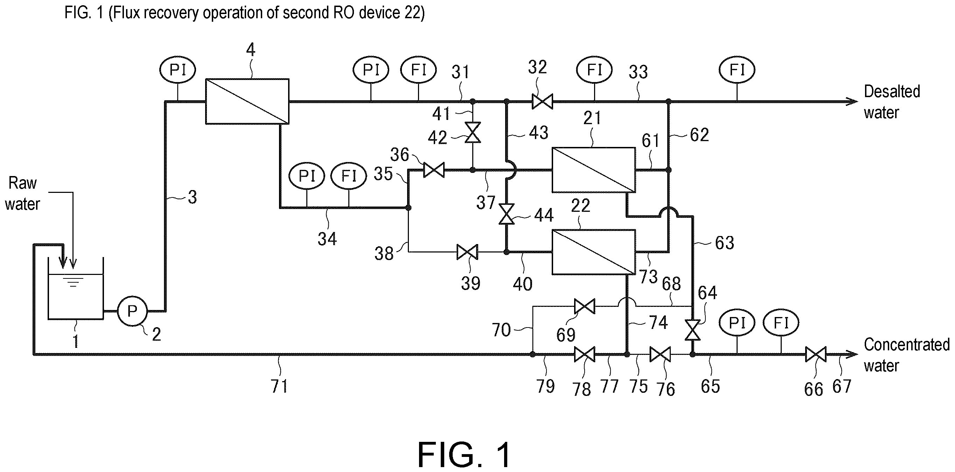

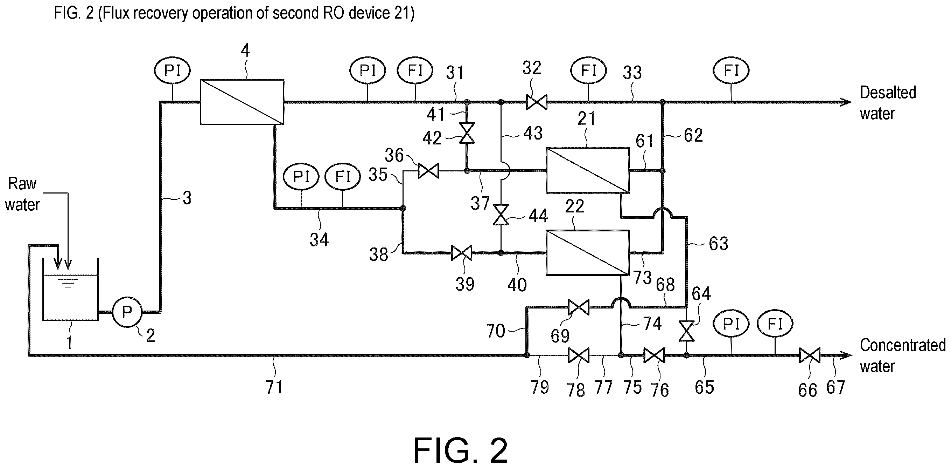

The first embodiment is described below with reference to FIG. 1 and FIG. 2. In this embodiment, a reverse osmosis membrane device (RO device) is taken as an example of the desalting device, but the present invention is not limited thereto. It is noted that the reverse osmosis membrane is preferably an aromatic polyamide reverse osmosis membrane, but is not limited thereto. Examples of desalting devices other than reverse osmosis membrane devices include nanofiltration membrane devices, forward osmosis membrane devices, membrane distillation devices, electrodialysis devices, and electrodeionization devices. Further, examples of water to be treated include industrial water with a salt concentration of about 10 to 5000 mg/L, particularly about 50 to 1000 mg/L, well water, fluoride-containing waste water, and the like, but are not limited thereto.

FIG. 1 and FIG. 2 show the configuration of the desalting device used in the method for operating the desalting device according to the embodiment. It is noted that the flow of water during operation is shown by a thick solid line. In the figure, PI denotes a pressure sensor, and FI denotes a flow rate sensor.

In this embodiment, a first RO device 4 and a second RO device are arranged in series. As the second RO device, two second RO devices 21 and 22 are arranged in parallel. In FIG. 1, one second RO device 21 is in a normal operation and the other second RO device 22 is in a dilute water passing operation, and in FIG. 2, the one second RO device 21 is in the dilute water passing operation and the other second RO device 22 is in the normal operation.

[During operation of FIG. 1]

As shown in FIG. 1, raw water in a raw water tank 1 is supplied to the first RO device 4 via a pump 2 and a pipe 3, and desalted water (permeated water) is taken out as desalted water via a pipe 31, a valve 32, and a pipe 33.

The concentrated water from the first RO device 4 (first concentrated water) is supplied to the one second RO device 21 via pipes 34 and 35, a valve 36, and a pipe 37.

The desalted water (permeated water) from the second RO device 21 is merged into the pipe 33 via pipes 61 and 62 and taken out as desalted water. The concentrated water from the second RO device 21 is taken out as concentrated water via a pipe 63, a valve 64, a pipe 65, a valve 66, and a pipe 67.

A pipe 38 branching from the pipe 34 is connected to a water supply port of the other second desalting device 22 via a valve 39 and a pipe 40. In FIG. 1, the valve 39 is shown closed.

The pipes 31 and 37 are connected by a pipe 41 and a valve 42. The pipe 31 and 40 are connected by a pipe 43 and a valve 44. In FIG. 1, the valve 42 is shown closed and the valve 44 is shown open. Thus, a part of the first desalted water from the pipe 31 is supplied to the water supply port of the second desalting device 22 via the pipes 43 and 40, and the second desalting device 22 is caused to be in the dilute water passing operation.

During the dilute water passing operation of the other second RO device 22, the desalted water from the other second RO device 22 is merged into the pipe 33 via the pipes 73 and 62 and taken out as desalted water. The concentrated water from the second RO device 22 is returned to the raw water tank 1 via pipes 74 and 77, a valve 78, and pipes 79 and 71.

[During operation of FIG. 2]

Contrary to FIG. 1, in FIG. 2, the one second desalting device 21 is in the dilute water passing operation, and the other second desalting device 22 is in the normal operation. In this case as well, raw water in the raw water tank 1 is supplied to the first RO device 4 via the pump 2 and the pipe 3, and desalted water (permeated water) is taken out as desalted water via the pipe 31, the valve 32, and the pipe 33.

In FIG. 2, the valve 36 is closed and the valve 39 is open. Thus, the concentrated water from the first RO device 4 (first concentrated water) is supplied to the other second RO device 22 via the pipes 34 and 38, the valve 39, and the pipe 40.

The desalted water (permeated water) from the second RO device 22 is merged into the pipe 33 via the pipes 73 and 62 and taken out as desalted water. The concentrated water from the second RO device 22 flows through the pipes 74 and 75 and the valve 76 into the pipe 65, and is taken out as concentrated water.

In addition, in FIG. 2, the valve 42 is open and the valve 44 is closed. Thus, a part of the first desalted water from the pipe 31 is supplied to the water supply port of the one second desalting device 21 via the pipes 42 and 37, and the second desalting device 21 is caused to be in the dilute water passing operation. The desalted water from the one second RO device 21 is merged into the pipe 33 via the pipes 61 and 62 and taken out as desalted water. The concentrated water from the one second RO device 21 is returned to the raw water tank 1 via the pipes 63 and 68, the valve 69, and the pipes 70 and 71.

In this way, in the method for operating the desalting device in FIG. 1 and FIG. 2, by operating one of the two second desalting devices 21 and 22 arranged in parallel in the normal operation while passing the first desalted water through the other to perform the dilute water passing operation, a decrease in performance of the second RO device may be prevented without stopping the desalting devices.

In FIG. 1 and FIG. 2, one first RO device 4 and two second RO devices 21 and 22 are arranged, but more than one of each may be arranged. Further, in FIG. 1 and FIG. 2, when each of the second RO devices 21 and 22 are in the dilute water passing operation, although the dilute water is separated into concentrated water and desalinated water, by closing a valve (not shown) of the desalted water flow passage, the dilute water is not separated into concentrated water and desalted water, and only concentrated water may be discharged from the second RO devices 21 and 22.

[Dilute water passing speed]

The water passing speed of the dilute water may be appropriately determined corresponding to the clogging state of the desalting device, for example, in the case of a reverse osmosis membrane, the water passing speed is preferably 0.001 to 1 m/s, particularly 0.02 to 0.2 m/s. Specifically, in the case of a 4-inch module, the water passing speed is preferably 300 to 2000 L/Hr per unit, and in the case of an 8-inch module, the water passing speed is preferably 1.8 to 10 $m^3$/Hr per unit. Further, the pressure at the concentrated water discharge side of the desalting device is preferably 0.1 to 2 MPa.

[Timing of switching the second desalting device that passes dilute water]

Before the corrected permeation flux of the second RO device decreases from the initial operation stage, specifically, before the same decreases by 5% or more from the initial operation stage, the second RO device through which the dilute water passes is switched. It is noted that 5% is merely an example, and any value selected from between 1% and 5% may be used. In particular, it is preferable to measure the change in permeation flux of the terminal RO which is most concentrated in the second RO device. The corrected permeation flux is as described in Example below.

Rather than detecting the decrease in the corrected permeation flux, it is also possible to operate the one second RO devices in normal operation and the other second RO device in the dilute water passing operation for a predetermined period of time, and then switch the one second RO device to the normal operation and the other second RO device to the dilute water passing operation. The predetermined period of time is, for example, 10 to 240 minutes, particularly 30 to 180 minutes, for example, about 90 minutes.

[Dilute water quality]

In the above embodiment, although the first desalted water is used as the dilute water, in the present invention, the dilute water may be any water in which the dissolved salts are less than the saturation solubility. Thus, a second desalted water (permeated water of the second RO device) may be used as the dilute water. Moreover, a mixture of the permeated water from the first RO device or the second RO device and the raw water may be used as the dilute water. Furthermore, a mixture of the permeated water from the first RO device or the second RO device and the first concentrated water may be used as the dilute water. The saturation solubility of a dissolved salt is the solubility product Ksp of a scale species XY with respect to the molar concentration of $X^+$ $[X^+]$ and the molar concentration of $Y^-$ $[Y^-]$, where $[X^+][Y^-] = Ksp$ is satisfied.

It is noted that, since the recovery effect of the permeated water amount is small when the temperature of the dilute water is low, the temperature of the dilute water is preferably 20°C or higher, particularly 25°C or higher.

[Scale inhibitor added to dilute water]

A scale inhibitor may be added to the dilute water. The addition of scale inhibitor may improve the ability to dissolve scale and prevent dissolved scale from re-adhering.

The scale inhibitor may be appropriately selected depending on the type of desalting device and raw water used. A reverse osmosis membrane device is used as the desalting device, and in the case of water to be treated that tends to produce calcium carbonate scale, phosphonic acids such as 2-phosphonobutane-1,2,4-tricarboxylic acid, copolymers of acrylic acid and 2-acrylamido-2-methylpropanesulfonic acid, polyacrylic acid, etc. may be used, and in the case of water to be treated that tends to produce calcium fluoride scale, phosphonic acids such as 2-phosphonobutane-1,2,4-tricarboxylic acid, polyacrylic acid, etc. may be used. Further, the amount of these scale inhibitors to be added is about 10 to 1000 mg/L.

It is noted that a pH adjuster may be added to the dilute water to improve the dissolving power of scale and to prevent re-adhesion of dissolved scale.

[Dilute water passing direction]

When dilute water is passed through as shown in FIG. 1, it is preferable to pass the water through the water supply side of the second RO device, but it may also be passed through the concentrated water outlet side of the second RO device. Further, during the time that the dilute water is being passed through the desalting device, the recovery rate may be maintained within a range in which the concentrated water in the desalting device is less than the saturation solubility, and treated water may be produced while the water is being passed through the desalting device.

In the above embodiment, the RO devices are installed in two stages, but they may be installed in three or more stages. It is noted that when three or more stages are installed, it is preferable that the desalting device for passing the dilute water is the last one.

[Water quality of first concentrated water]

The present invention may be suitably used in cases where calcium fluoride scale or calcium carbonate scale is formed in the second RO device. Specifically, the first concentrated water supplied to the second RO device may be suitably used in the following cases.

Water temperature 20°C or higher pH < 6.0
Calcium ion concentration: 50 to 500 mg/L (preferably 100 to 250 mg/L)
Aluminum ion concentration: 0.01 to 0.5 mg/L (preferably 0.1 to 0.25 mg/L)
Iron ion concentration: 0.01 to 0.25 mg/L (preferably 0.1 to 0.25 mg/L)
Silica concentration: 500 to 1500 mg/L (preferably 700 to 1200 mg/L)

Example

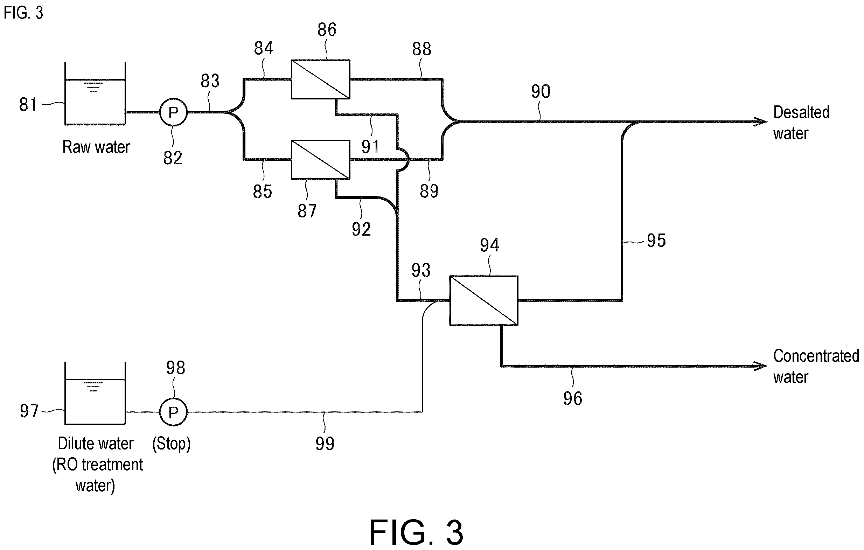

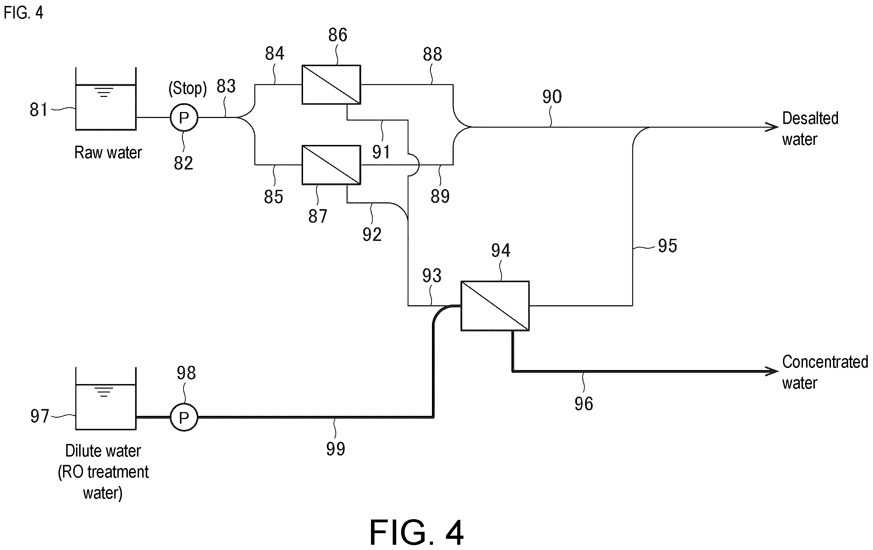

Using the test equipment shown in FIG. 3 and FIG. 4, a simulated raw water treatment operation (FIG. 3) and a dilute water passing operation to the second RO device (FIG. 4) were alternately performed. It is noted that in this test, the corrected permeation flux value was used as the flux value.

[Corrected permeation flux]

Since the actual permeation flux is affected by operating pressure, water temperature, and salinity concentration in the feed water, it is desirable to specify the corrected permeation flux as data indicating the performance of the RO device.

Here, the corrected permeation flux is generally calculated by the method described in the standardization method for reverse osmosis membrane element and module permeated water amount performance data as specified in JIS K3 8021990.

That is, the permeated water amount performance data is corrected by the following Equation (1) to calculate a corrected permeation flux $F_{ps}$.

[Expression 1]

$$F_{ps} = \left(Q_{pa}\right) \times \frac{\left[ P_{fa} - \dfrac{\Delta P_{fba}}{2} - P_{pa} - \pi_{fba} + \pi_{pa} \right]}{\left[ P_{fs} - \dfrac{\Delta P_{fbs}}{2} - P_{ps} - \pi_{fbs} + \pi_{ps} \right]} \times \frac{\left(TCF_a\right)}{\left(TCF_s\right)} \qquad (1)$$

Where, $Q_{pa}$: permeated water amount (m$^3$/d) under actual operating conditions

$P_{fa}$: Operating pressure (kPa) under actual operating conditions
$\Delta P_{fba}$: Module differential pressure (kPa) under actual operating conditions
$P_{pa}$: Pressure (kPa) on the permeated water side under actual operating conditions
$\Pi_{fba}$: Osmotic pressure (kPa) of the average solute concentration on the supply side and the concentrated side under actual operating conditions

$TCF_a$: Temperature conversion coefficient under actual operating conditions

$P_{fs}$: Operating pressure (kPa) under standard operating conditions

$\Delta P_{fbs}$: Module differential pressure (kPa) under standard operating conditions

$P_{ps}$: Pressure (kPa) on the permeated water side under standard operating conditions

$\Pi_{fbs}$: Osmotic pressure (kPa) of the average solute concentration on the supply side and the concentrated side under standard operating conditions

$TCF_s$: Temperature conversion coefficient under standard operating conditions

<Desalting device configuration in FIG. 3 and FIG. 4>

Raw water in a raw water tank 81 may be feed via a pump 82 and pipe 83. The pipe 83 branches into pipes 84 and 85, which are connected to first RO devices 86 and 87. The permeated water from the first RO devices 86 and 87 may be taken out as desalted water via pipes 88 and 89 and a joint pipe 90.

The concentrated water from the first RO devices 86 and 87 is supplied to a second RO device 94 via pipes 91 and 92 and a joint pipe 93. The permeated water from the second RO device 94 flows through a pipe 95 and joins the pipe 90. The concentrated water from the second RO device 94 is discharged outside the system via a pipe 96.

The dilute water in a dilute water tank 97 may be supplied to the second RO device 94 via a pump 98, a pipe 99 and the pipe 93. In this test example, the above desalted water was used as the dilute water.

FIG. 3 shows a normal raw water treatment operation with the pump 82 operating and the pump 98 stopped. The raw water is subjected to RO treatment in the first RO device 86 and 87 or further in the second RO device 94, and separated into permeated water (desalted water) and concentrated water.

FIG. 4 shows a state in which the dilute water is passed through the second RO device 94. In FIG. 4, the pump 82 is stopped, only the pump 98 is operated, and the supply of raw water to the first RO devices 86 and 87 is stopped. The dilute water in the dilute water tank 98 is passed through the second RO device 94, whereby scale of the second RO device 94 is dissolved and removed.

It is noted that in FIG. 4, the permeated water is not allowed to flow into the pipe 95 while the dilute water is being passed through the second RO device 94. However, the permeated water may be allowed to flow into the pipe 95 while the dilute water is being passed through the second RO device 94.

<Simulated raw water>

As a simulated raw water, an aqueous solution containing calcium chloride (110 mg/L), sodium bicarbonate (70 mg/L), sodium metasilicate (1610 mg/L), aluminum chloride hexahydrate (0.45 mg/L), ferric chloride (0.4 mg/L), and a scale inhibitor (2-phosphonobutane-1,2,4-tricarboxylic acid) (10 mg/L) was prepared, and further, the pH was adjusted to 5.5 with an aqueous sodium hydroxide solution or an aqueous sulfuric acid solution (water temperature 20°C).

<Dilute water>

As the dilute water, the permeated water obtained when the simulated raw water was passed through the RO device as shown in FIG. 3 was used. The scale inhibitor was added at 10 mg/L.

[Example 1]

The above-mentioned simulated raw water and simulated dilute water were passed through the desalting device of FIG. 3 and FIG. 4.

<Water passing order>

Simulated raw water passing step (FIG. 3): Simulated raw water was passed through the reactor so that the initial permeation flux was 0.45 m/D and the water flow rate was 0.1 m/s, and the operation was carried out for 90 minutes with a recovery rate of 73%. (The corrected permeation flux did not decrease substantially after 90 minutes of operation.)

Dilute water passing step (FIG. 4): After carrying out the simulated raw water passing step for 90 minutes, the dilute water was passed through for 30 minutes at the same pressure and water passing amount as in the simulated raw water passing step. Then, the process returned to the simulated raw water passing step shown in FIG. 3.

[Comparative Example 1]

In the simulated raw water passing step of FIG. 3, the simulated raw water passing in FIG. 3 and the dilute water passing in FIG. 4 were alternately conducted in the same manner as in Example 1, except that the passing was switched to the dilute water passing (passing for 30 minutes) in FIG. 4 when the ratio of the flux to the initial standardized permeated water amount reached 90%.

[Results and Discussion]

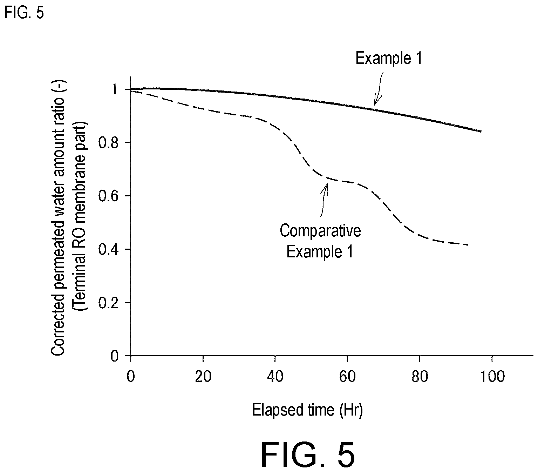

The ratio $F/F_0$ of the flux F of the second RO device 94 immediately before the end of the simulated raw water passing step to the initial flux $F_0$ is shown in FIG. 5 as the "corrected permeated water amount ratio." As shown in FIG. 5, by performing the dilute water passing step before the flux of the RO membrane decreases, as in Example 1, the performance of the RO membrane may be prevented from decreasing. In contrast, when the ratio of the flux to the initial standardized permeated water amount reaches 90%, a degraded desalting device is unable to fully recover the performance thereof when it is switched to the passage of the dilute water (Comparative Example 1).

Although the present invention has been described in detail with reference to a particular aspect, it is apparent to a person skilled in the art that various modifications can be made therein without departing from the spirit and scope of the present invention.

The present application is based on Japanese Patent Application No. 2022-032755 filed on March 3, 2022, which is incorporated herein by reference in its entirety.

Reference Signs List

1 Raw water tank
4 First RO device
21, 22 Second RO device
81 Raw water tank
86, 87 First RO device
94 Second RO device
97 Dilute water tank

**Claims**

1. A method for operating a desalting device having a first desalting device and a second desalting device, comprising:

   a normal operation step, in which a water to be treated is supplied to a first desalting device and separated into a first concentrated water and a first desalted water, and the first concentrated water is supplied to a second desalting device and separated into a second concentrated water and a second desalted water; and
   a dilute water passing operation step, in which a dilute water having a lower concentration than the first concentrated water is passed through the second desalting device before a corrected permeated water amount of the second desalting device is reduced.

2. The method for operating the desalting device according to claim 1, wherein a plurality of the second desalting devices are arranged in parallel, and while the first desalting device and some of the second desalting devices are performing the normal operation step, other second desalting devices perform the dilute water passing operation step.

3. The method for operating the desalting device according to claim 1, which is a method for operating a desalting device having a first desalting device and two second desalting devices, alternately performing:

   a first water passing pattern, in which a water to be treated is supplied to a first desalting device and separated into a first concentrated water and a first desalted water, the first concentrated water is supplied to one second desalting device and separated into a second concentrated water and a second desalted water, and a dilute water having a lower concentration than the first concentrated water is passed through other second desalting device; and
   a second water passing pattern, in which a water to be treated is supplied to a first desalting device and separated into a first concentrated water and a first desalted water, the first concentrated water is supplied to other second desalting device and separated into a second concentrated water and a second desalted water, and a dilute water having a lower concentration than the first concentrated water is passed through one second desalting device,

wherein the first water passing pattern and the second water passing pattern are switched at a frequency of once every 30 to 180 minutes.

4. The method for operating the desalting device according to any one of claims 1 to 3, wherein a water having a dissolved salt concentration less than a saturation solubility is used as a dilute water.

5. The method for operating the desalting device according to any one of claims 1 to 3, wherein a desalted water from the first desalting device or from the first desalting device and the second desalting device is used as a dilute water.

6. The method for operating the desalting device according to any one of claims 1 to 5, wherein a scale inhibitor is added to a dilute water.

7. The method for operating the desalting device according to any one of claims 1 to 6, wherein the desalting device is a reverse osmosis membrane device.

8. The method for operating the desalting device according to any one of claims 1 to 7, wherein a dilute water has a water temperature of 25°C or higher.

9. The method for operating the desalting device according to any one of claims 1 to 8, wherein the first concentrated water has a water temperature of 20°C or higher, a pH of <6.0, a calcium ion concentration of 50 to 500 mg/L, an aluminum ion concentration of 0.01 to 0.5 mg/L, an iron ion concentration of 0.01 to 0.25 mg/L, and a silica concentration of 500 to 1500 mg/L.

FIG. 1 (Flux recovery operation of second RO device 22)

FIG. 1

FIG. 2 (Flux recovery operation of second RO device 21)

FIG. 2

EP 4 487 939 A1

FIG. 3

FIG. 3

EP 4 487 939 A1

FIG. 4

FIG. 5

FIG. 5

## INTERNATIONAL SEARCH REPORT

| International application No. |
|---|
| **PCT/JP2023/003390** |

### A. CLASSIFICATION OF SUBJECT MATTER

*B01D 61/12*(2006.01)i; *B01D 61/58*(2006.01)i; *C02F 1/44*(2023.01)i
FI: C02F1/44 G; B01D61/58; B01D61/12

According to International Patent Classification (IPC) or to both national classification and IPC

### B. FIELDS SEARCHED

Minimum documentation searched (classification system followed by classification symbols)

B01D61/00-71/82; B01D53/22; C02F1/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | JP 2021-037480 A (JAPAN ORGANO CO., LTD.) 11 March 2021 (2021-03-11)<br>claims 1-10, paragraphs [0001]-[0072], fig. 1-4 | 1-9 |
| X | JP 2021-037481 A (JAPAN ORGANO CO., LTD.) 11 March 2021 (2021-03-11)<br>claims 1-13, paragraphs [0001]-[0077], fig. 1, 2 | 1-9 |
| A | CN 112919693 A (BGT GROUP CO., LTD.) 08 June 2021 (2021-06-08)<br>claims 1-10 | 1-9 |
| A | WO 2017/158887 A1 (KURITA WATER INDUSTRIES LTD.) 21 September 2017 (2017-09-21)<br>claims 1-14 | 9 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/003390**

| Patent document cited in search report | | | Publication date (day/month/year) | Patent family member(s) | | | Publication date (day/month/year) |
|---|---|---|---|---|---|---|---|
| JP | 2021-037480 | A | 11 March 2021 | (Family: none) | | | |
| JP | 2021-037481 | A | 11 March 2021 | (Family: none) | | | |
| CN | 112919693 | A | 08 June 2021 | (Family: none) | | | |
| WO | 2017/158887 | A1 | 21 September 2017 | US 2019/0039022 A1 claims 1-14 CN 108698859 A KR 10-2018-0122325 A | | | |

Form PCT/ISA/210 (patent family annex) (January 2015)

**EP 4 487 939 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004141846 A
- JP 2004261724 A
- JP 2020121278 A
- JP 2022032755 A